# EUROPEAN PATENT SPECIFICATION

(11) **EP 0 708 288 B1**
(45) Date of publication and mention of the grant of the patent: **31.03.1999**
(21) Application number: 94203028.9
(22) Date of filing: 19.10.1994
(51) Int. Cl.: F16L 17/10, F16J 15/46, A01J 25/11

(54) **Whey draining apparatus**
Vorrichtung zum Abtrennen von Molke
Dispositif pour le drainage de petit-lait

(43) Date of publication of application: 24.04.1996
(73) Proprietor: Tetra Laval Holdings & Finance S.A., 1009 Pully (CH)
(72) Inventor: Schouten, Frank, NL-8435 WR Donkerbroek (NL)
(74) Representative: Smulders, Theodorus A.H.J., Ir.

(56) References cited:
- EP-A- 0 220 336
- EP-A- 0 340 385
- EP-A- 0 621 429
- DE-A- 1 918 804
- US-A- 3 982 480

## Description

The invention relates to a whey draining apparatus for draining whey from a whey/curd mass, said apparatus comprising at least one column including an inner tubular element disposed in an outer tubular element and at least one sealing element for forming a liquid-tight seal between the two tubular elements, said sealing element at least comprising an endless element of flexible material which interacts with one of the tubular elements and of which at least a part of the periphery can be moved in such a way under the influence of a pressure medium that it rests against the other tubular element and provides a seal, wherein said endless element of flexible material is connected to positioning means fixed to the inner tubular element.

Such a whey draining apparatus is known from practice.

In the preparation of cheese, a whey/curd mass produced following the addition of enzymes and a starter (bacterial culture of lactic acid) to milk is guided through a drainage apparatus, in order to remove whey from the mass. Such an apparatus comprises one or more moulding pipes which are made up of an inner and an outer column. The space between these columns is divided by partitions into several chambers which are separated from each other by means of sealing elements. The chambers thus formed, called counterpressure chambers, are connected to riser pipes for removing whey from the whey/curd mass. These counter pressure chambers combined with the riser pipes regulate the removal of whey by building up a counter pressure.

In the known apparatus such a sealing element is situated on the inside wall of the outer column. The positioning means comprise a flange which is provided on its inner periphery with a groove. An inflatable rubber band or hose is placed in the groove. The band, which has a special profile and a special shape, is situated in a press fit in the groove of the flange. The flange is provided with a supply pipe for a pressure medium, in particular air.

This supply pipe is permanently fixed to the rubber band. The band can be inflated by supplying the medium through this pipe When the band is inflated, it expands and moves slightly out of the groove, thereby coming into contact with a flange placed on the inner column, in order to form a liquid-tight seal between the two columns.

The band or hose must have a special profile and a special shape, because while it is being inflated only the inner periphery of the band can move. The outer periphery is held in place by the groove of the flange.

The special shape and the special profile of the band make it expensive to manufacture. In addition, this band has the disadvantage that it has to be manufactured specially and very accurately and has a long delivery time. Another disadvantage of this band is that it is not easily replaced. The costs involved in using this known sealing element are therefore high.

Another disadvantage is that air is used as the pressure medium. If there is a leak, this air can come into contact with the whey, which is undesirable from the point of view of hygiene and also in terms of economics, because the whey then turns sour, and the market value of sour whey is low. If there is a leak, air can also reach the curd mass, which is equally undesirable.

The object of the invention is to provide a whey draining apparatus including at least one sealing element which is simple and cheap to manufacture.

Another object of the invention is to provide a whey draining apparatus including a sealing element in which no compressed gaseous medium needs to be used.

Yet another object is to provide a whey draining apparatus including a sealing element which is easily removed and replaced, without the need for auxiliary tools.

A whey draining apparatus according to the invention is characterized in that the positioning means are in the form of a flange which is fixed to and around the inner tubular element and extends into the annular space between the inner and outer tubular elements, and which is provided at its outer periphery with a groove which accommodates, in a sealing manner, the endless element of flexible material and wherein at the inside of the groove one or more supply apertures for a pressure medium are present.

According to the invention the at least one sealing element is situated on the inner column, which is removable, with the result that an easily accessible construction is obtained. When the pressure medium is supplied, it will fill the space in the groove behind the endless sealing element of flexible material and spread there. Since the element fits exactly into the groove and seals the groove, the medium in the space behind the element will build up a pressure, with the result that the element moves outwards. The element is then pressed against the outer column, in order to form a liquid-tight seal between the inner and the outer column. .

An apparatus according to the invention has the advantage that the sealing element(s) can be made of materials which are commercially available. In addition, the endless element is simple to manufacture, for example by cutting it off straight at the desired length and joining the two ends to each other by welding or gluing or in some other suitable way. The manufacturing costs of this element are therefore low compared with those of the known inflatable band.

The removal and replacement of the sealing element are also very simple and can be carried out without auxiliary tools. If, in the absence of compressed medium, the outside of the groove and of the periphery of the element lie in roughly the same cylindrical plane, the seal can be achieved advantageously through the fact that the movement of the element under the influence of the compressed medium is less than half the width of the element.

In a preferred embodiment the sealing element is of annular shape, which means that the space filled with pressure medium in the groove behind the element is the same size all over, and uniform pressure can thus be built up by this medium and exerted on the element.

The element is preferably made of rubber or an elastic plastics, material because the endless element can then easily be fixed in a slightly wedged fit sealing the groove; a suitable material is neoprene rubber.

From the point of view of hygiene, the element is preferably of a solid construction.

In another embodiment, the cross-section of the element when not under pressure is preferably round, so that the element seals the groove well. Other shapes such as square or rectangular are equally possible, if the condition that the groove should be well sealed is met.

In another possible embodiment of the invention, the sealing element is mounted under pretension in the groove, so the element lies fully in the groove when not under the influence of the pressure medium. In this way the inner column is easily removed from the outer column.

With the same object, the apparatus according to the invention can also be designed in such a way that when the sealing element is in the non-sealing position, the element lies fully in the groove, under the influence of the pressure medium having a sub-atmospheric pressure. In this way the medium exerts a suction force on the element, so the element is sucked into the groove.

In another embodiment, the supply means for the compressed medium are suitable for supplying liquid medium, preferably suitable for supplying water. In the event of leaks, water causes no damage to the products, unlike air which does have a damaging effect on the whey and the curd.

In order to ensure an even better seal, the positioning means preferably do not include a flange on the outer element of the tubular elements. In this case the inside wall of the outer element of the tubular elements is flush. In the sealing position the element will deform slightly through the pressure applied by the compressed medium, with the result that the contact surface of said element with the inside wall of the outer element is increased. If the inside wall of the outer element of the tubular elements is flush, the inner element is easily placed in the outer element, because the sealing element on the inner element does not have to be positioned relative to a flange on the outer element, as is the case with the known sealing element.

The positioning means can also comprise discharge means for the pressure medium. In this way the pressure medium can easily be discharged in the non-activated state of the sealing element. It is also possible in this way to circulate cleaning fluid behind the element, for cleaning the element and the space behind it. The fact that the sealing element is easily removable also makes satisfactory cleaning from the outside possible.

Although, in the case of the prior art design, a seal is fitted once on the fixed outer column, and, in the case of the device according to the invention, a seal is fitted the same number of times on an inner column as the number of inner columns to be used with the outer column, the design of the sealing elements is so much simpler and the parts thereof are so much cheaper that with an average number of inner columns per drainage apparatus (two to three) the cost per apparatus is halved. Three to four sealing elements are required per inner column.

It is observed that DE-A-1 918 804 discloses a sealing device sealing an axle in a bore in a machine case. This prior sealing device comprises an annular element placed in an annular groove in the wall of the bore. The annular element may be compressed to engage the axle placed in the bore. There are no tubular elements and the sealing device does not have a flange on the inner element nor a flange extending into a gap between an inner and an outer element.

EP-A-0 340 385 discloses a sealing element placed in an annular chamber of a first element. The sealing element can be expanded to engage a second element. The first and second elements may for instance be a machine case and an axle.

Again this prior sealing element is not mounted to the inner element and the sealing element does not have a flange extending into a gap between both elements.

The invention is explained in greater detail with reference to the appended drawings, in which:
Fig. 1 shows a sealing element according to the prior art;
Fig. 2 shows by way of example, an embodiment of a sealing element according to the invention; and
Fig. 3 diagrammatically shows an example of a drainage apparatus including sealing elements according to the present invention.

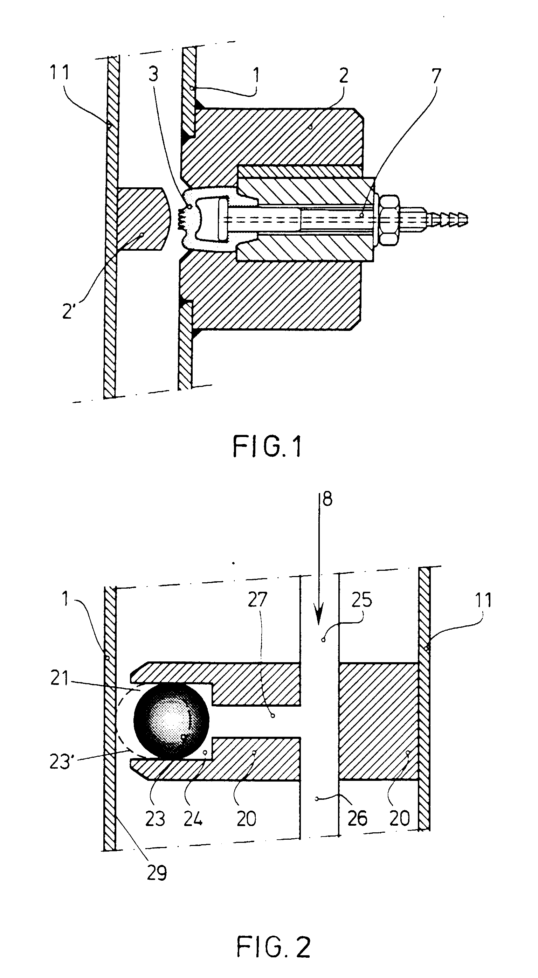

Fig. 1 shows a diagrammatic representation of a sealing element according to the prior art. This sealing element is fitted on the outer tubular column 1 of which only a part is shown in cross-sectional view and includes a flange 2. In the flange 2 a hollow inflatable band or hose 3 is mounted, which is connected to supply means 7 for the supply of air. When the hollow band 3 is inflated by way of the means 7 for the supply of air, the inner periphery of the band 3 moves outwards, i.e. inwards in the column and comes into contact with a flange 2' on the inner column 11, in order to form a seal between the two columns 1 and 11. This figure shows clearly the special profile and the special shape of the band or hose 3.

Fig. 2 shows a diagrammatic representation of an example of an embodiment of a sealing element according to the present invention, in which parts which are identical to the parts of the device shown in Fig. 1 are indicated by the same reference numbers.

The sealing element includes a flange 20 disposed on the inner column 11 of an apparatus for draining whey from a whey/curd mixture. The flange 20 has a groove 21 at its outer periphery. The groove 21 accommodates an endless element 23, which fits in a sealing manner in the groove 21. The element preferably is slightly compressed when it is situated in the groove so as to ensure an effective seal. The space 24 behind the endless element 23 in the groove 21 is in communication with supply means 25, 26, 27 for supplying a pressure medium 8. Supplying the pressure medium 8 by way of the supply means 25, 26, 27 provided for the purpose causes the space 24 behind the element 23 in the groove 21 to be pressurized. The element 23 stretches and moves outwards under the influence of the pressure medium 8 and comes into contact with the inner wall surface 29 of the outer column 1. The position of the element 23 when it is in the extended position under the influence of the pressure medium 8 is indicated at 23' by a dotted line in figure 2. The element 23 is deformed slightly at the place where it comes into contact with the smooth inside wall 29 of the outer column 1, whereby the contact surface and thus the sealing effect is increased.

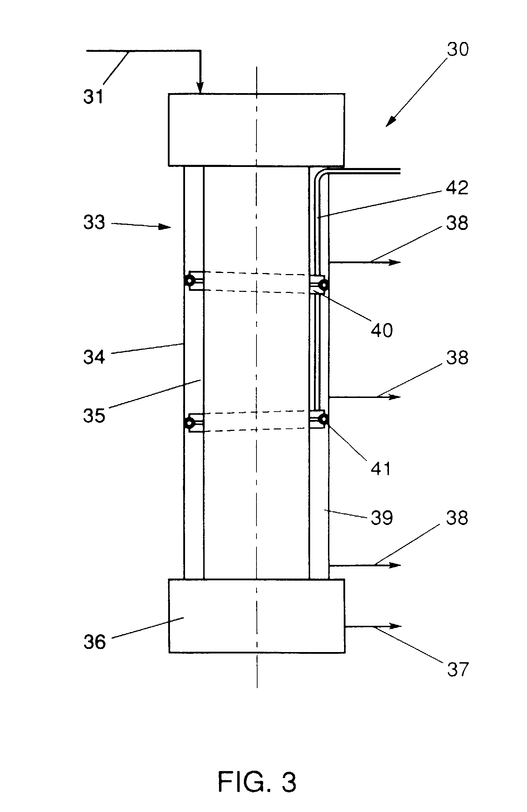

Fig. 3 schematically shows an example of an apparatus 30 for draining whey from a whey/curd mixture. The whey/curd mixture is supplied by a tube or hose as indicated at 31 to an inlet device 32 on top of a column 33 comprising an outer tube 34 and a concentrically mounted inner perforated tube 35. At the bottom of the column 33 means 36 are provided for separating and removing blocks of curd from the column. The means 36 has a line 37 for removing whey. In a similar manner the column has a number of lines 38 for removing whey from the space 39 between the outer and inner tubes. This is all known in the art, for example from US 3,982,480.

The space 39 between the inner and outer tubes is subdivided into annular subspaces by means of sealing elements according to the present invention. In the example shown two sealing elements 40, 41 have been used thus providing three separate subspaces. At 42 a supply duct (pipe, hose or line) for pressure medium has been shown. In this example the line 42 serves both sealing elements, but of course it would be possible to provide a separate supply line for each sealing element, thereby facilitating individual control of the sealing force of each element.

The sealing elements may be used a shown intermediate the top and bottom ends of the column but could also be provided at the top and bottom ends. In that case intermediate sealing elements or may not be present.

## Claims

1. A whey draining apparatus (30) for draining whey from a whey/curd mass, said apparatus comprising at least one column including an inner tubular element (11;35) disposed in an outer tubular element (1;34) and at least one sealing element for forming a liquid-tight seal between the two tubular elements (1,11;34,35), said sealing element (20,23;40,41) at least comprising an endless element (23) of flexible material which interacts with one of the tubular elements (1,11;34,35) and of which at least a part of the periphery can be moved in such a way under the influence of a pressure medium (8) that it rests against the other tubular element and provides a seal, wherein said endless element (23) of flexible material is connected to positioning means (20) fixed to the inner tubular element, **characterized in that** the positioning means (20) are in the form of a flange which is fixed to and around the inner tubular element (11;35) and extends into the annular space (39) between the inner and outer tubular elements, and which is provided at its outer periphery with a groove (21) which accommodates, in a sealing manner, the endless element (23) of flexible material and wherein at the inside of the groove (21) one or more supply apertures (27) for a pressure medium (8) are present.

2. A whey draining apparatus according to claim 1, **characterized in that** the movement of the endless element (23) under the influence of the pressure medium (8) is less than half the width of the endless element (23).

3. A whey draining apparatus according to claim 1 or 2, **characterized in that** the endless element (23) has an annular shape.

4. A whey draining apparatus according to one of claims 1 to 3, **characterized in that** the endless element (23) is made of rubber or an elastic plastic.

5. A whey draining apparatus according to any one of claims 1 to 4, **characterized in that** the endless element (23) is made of solid material.

6. A whey draining apparatus according to any one of claims 1 to 5, **characterized in that** the cross-section of the endless element (23) when not under pressure is round.

7. A whey draining apparatus according to any one of claims 1 to 6, **characterized in that** the endless element (23) is mounted under pretension in the groove (24), such that the endless element lies fully in the groove (24) when not under the influence of the pressure medium (8).

8. A whey draining apparatus according to any one of claims 1 to 6, **characterized in that** when in the non-sealing position, the endless element (23) lies fully in the groove (24), under the influence of the presure medium (8), which is under sub-atmospheric pressure.

9. A whey draining apparatus according to any one of claims 1-8, **characterized by** supply means (25,26,27;42) for a pressure medium, said supply means including at least one duct (25;42) connected to the supply apertures (27).

10. A whey draining apparatus according to claim 9, **characterized in that** the supply means (25,26,27;42) for the pressure medium (8) are arranged for supplying in use a liquid pressure medium.

11. A whey draining apparatus according to claim 9 or 10, **characterized in that** the supply means (25,26,27;42) are suitable for supplying water.

12. A whey draining apparatus according to any one of claims 1 to 11, **characterized in that** the positioning means (20) also have discharge means for the pressure medium.

13. A whey draining apparatus according to any one of claims 1-12, **characterized in that** at least one hose or line for a pressure medium is mounted in the space between the inner and outer tubular elements and is connected to at least one sealing element.

## Patentansprüche

1. Molke-Abtrennvorrichtung (30) zum Abtrennen von Molke aus einer Molke/Käsebruch-Masse, wobei die Vorrichtung wenigstens eine Säule einschließlich eines inneren rohrförmigen Elements (11; 35), das in einem äußeren rohrförmigen Element (1; 34) angeordnet ist, und wenigstens ein Dichtungselement zum Bilden einer flüssigkeitsdichten Dichtung zwischen den beiden rohrförmigen Elementen (1, 11; 34, 35) aufweist, wobei das Dichtungselement (20, 23; 40, 41) wenigstens ein Endloselement (23) aus flexiblem Material aufweist, das mit einem der rohrförmigen Elemente (1, 11; 34, 35) zusammenwirkt und von dem wenigstens ein Teil des Umfangs unter Einfluß eines Druckmediums (8) so bewegt werden kann, daß es an dem anderen rohrförmigen Element anliegt und eine Dichtung bildet, wobei das Endloselement (23) aus flexiblem Material mit einer Positioniereinrichtung (20) verbunden ist, die an dem inneren rohrförmigen Element befestigt ist, dadurch gekennzeichnet, daß die Positioniereinrichtung (20) in Form eines Flansches vorliegt, der befestigt ist an und um das innere rohrförmige Element (11; 35) und in den ringförmigen Raum (39) zwischen dem inneren und dem äußeren rohrförmigen Element verläuft und der an seinem äußeren Umfang mit einer Nut (21) versehen ist, in der in dichtender Weise das Endloselement (23) aus flexiblem Material aufgenommen ist, und wobei an der Innenseite der Nut (21) eine oder mehrere Zufuhröffnungen (27) für ein Druckmedium (8) vorhanden sind.

2. Molke-Abtrennvorrichtung nach Anspruch 1, dadurch gekennzeichnet, daß die Bewegung des Endloselements (23) unter Einfluß des Druckmediums (8) weniger als die Hälfte der Breite des Endloselements (23) beträgt.

3. Molke-Abtrennvorrichtung nach Anspruch 1 oder 2, dadurch gekennzeichnet, daß das Endloselement (23) eine ringförmige Form hat.

4. Molke-Abtrennvorrichtung nach einem der Ansprüche 1 bis 3, dadurch gekennzeichnet, daß das Endloselement (23) aus Gummi oder einem elastischen Kunststoff hergestellt ist.

5. Molke-Abtrennvorrichtung nach einem der Ansprüche 1 bis 4, dadurch gekennzeichnet, daß das Endloselement (23) aus massivem Material hergestellt ist.

6. Molke-Abtrennvorrichtung nach einem der Ansprüche 1 bis 5, dadurch gekennzeichnet, daß der Querschnitt des Endloselements (23), wenn dieses nicht unter Druck ist, rund ist.

7. Molke-Abtrennvorrichtung nach einem der Ansprüche 1 bis 6, dadurch gekennzeichnet, daß das Endloselement (23) unter Vorspannung in der Nut (24) angebracht ist, so daß das Endloselement vollständig in der Nut (24) liegt, wenn es nicht unter Einfluß des Druckmediums (8) steht.

8. Molke-Abtrennvorrichtung nach einem der Ansprüche 1 bis 6, dadurch gekennzeichnet, daß das Endloselement (23), wenn es sich in der nicht abdichtenden Stellung befindet, vollständig innerhalb der Nut (24) liegt, unter Einfluß des Druckmediums (8), das unter Unterdruck steht.

9. Molke-Abtrennvorrichtung nach einem der Ansprüche 1 bis 8, gekennzeichnet durch Zuführmittel (25, 26, 27; 42) für ein Druckmedium, wobei die Zuführmittel wenigstens eine mit den Zuführöffnungen (27) verbundene Leitung (25; 42) aufweisen.

10. Molke-Abtrennvorrichtung nach Anspruch 9, dadurch gekennzeichnet, daß die Zuführmittel (25, 26, 27; 42) für das Druckmedium (8) so ausgelegt sind, um im Betrieb ein flüssiges Druckmedium zuzuführen.

11. Molke-Abtrennvorrichtung nach Anspruch 9 oder 10, dadurch gekennzeichnet, daß die Zuführmittel (25, 26, 27; 42) geeignet zur Zufuhr von Wasser sind.

12. Molke-Abtrennvorrichtung nach einem der Ansprüche 1 bis 11, dadurch gekennzeichnet, daß die Positioniereinrichtung (20) auch Ablaßmittel für das Druckmedium umfaßt.

13. Molke-Abtrennvorrichtung nach einem der Ansprüche 1 bis 12, dadurch gekennzeichnet, daß wenigstens ein Schlauch oder eine Leitung für ein Druckmedium in dem Raum zwischen dem inneren und dem äußeren rohrförmigen Element angebracht ist und mit wenigstens einem Dichtungselement verbunden ist.

## Revendications

1. Dispositif pour le drainage de petit-lait (30) destiné à drainer le petit-lait d'une masse petit-lait/lait caillé, ledit dispositif comprenant au moins une colonne comportant un élément tubulaire interne (11 ; 35) disposé dans un élément tubulaire externe (1 ; 34) et au moins un élément d'étanchéité pour former un joint étanche aux liquides entre les deux éléments tubulaires (1, 11 ; 34, 35), ledit élément d'étanchéité (20, 23 ; 40, 41) comprenant au moins un élément sans fin (23) en matériau flexible qui coopère avec l'un des éléments tubulaires (1, 11 ; 34, 35) et dont au moins une partie de la périphérie peut être déplacée sous l'influence d'un milieu à pression (8) de telle sorte qu'il repose contre l'autre élément tubulaire et provoque une obturation, ledit élément sans fin (23) en matériau flexible étant connecté à des moyens de positionnement (20) fixés sur l'élément tubulaire interne, **caractérisé en ce que** les moyens de positionnement (20) se présentent sous la forme d'une bride qui est fixée à l'élément tubulaire interne (11; 35) et autour de celui-ci, et s'étend dans l'espace annulaire (39) entre les éléments tubulaires interne et externe, et qui est munie à sa périphérie externe d'une rainure (21) qui contient, d'une manière étanche, l'élément sans fin (23) en matériau flexible, et l'intérieur de la rainure (21) comportant une ou plusieurs ouvertures (27) d'amenée de milieu à pression (8).

2. Dispositif pour le drainage de petit-lait selon la revendication 1, **caractérisé en ce que** le déplacement de l'élément sans fin (23) sous l'influence du milieu à pression (8) est inférieur à la moitié de la largeur de l'élément sans fin (23).

3. Dispositif pour le drainage de petit-lait selon la revendication 1, **caractérisé en ce que** l'élément sans fin (23) présente une forme annulaire.

4. Dispositif pour le drainage de petit-lait selon l'une des revendications 1 à 3, **caractérisé en ce que** l'élément sans fin (23) est réalisé en caoutchouc ou en matière plastique élastique.

5. Dispositif pour le drainage de petit-lait selon l'une quelconque des revendications 1 à 4, **caractérisé en ce que** l'élément sans fin (23) est réalisé en matériau plein.

6. Dispositif pour le drainage de petit-lait selon l'une quelconque des revendications 1 à 5, **caractérisé en ce que** la section transversale de l'élément sans fin (23), lorsque celui-ci n'est pas sous pression, est ronde.

7. Dispositif pour le drainage de petit-lait selon l'une quelconque des revendications 1 à 6, **caractérisé en ce que** l'élément sans fin (23) est monté sous précontrainte dans la rainure (21), de sorte que l'élément sans fin repose complètement dans la rainure (21) lorsqu'il n'est pas sous l'influence du milieu à pression (8).

8. Dispositif pour le drainage de petit-lait selon l'une quelconque des revendications 1 à 6, **caractérisé en ce que**, lorsqu'il est dans la position de non-étanchéité, l'élément sans fin (23) repose complètement dans la rainure (21), sous l'influence du milieu à pression (8), qui est sous une pression inférieure à celle de l'atmosphère.

9. Dispositif pour le drainage de petit-lait selon l'une quelconque des revendications 1 à 8, **caractérisé par** des moyens d'alimentation (25, 26, 27 ; 42) en milieu à pression, lesdits moyens d'alimentation comprenant au moins un conduit (25 ; 42) connecté aux ouvertures d'amenée (27).

10. Dispositif pour le drainage de petit-lait selon la revendication 9, **caractérisé en ce que** les moyens d'alimentation (25, 26, 27 ; 42) en milieu à pression (8) sont conçus pour amener pendant l'utilisation un moyen à pression liquide.

11. Dispositif pour le drainage de petit-lait selon l'une ou l'autre des revendications 9 et 10, **caractérisé en ce que** les moyens d'alimentation (25, 26, 27 ; 42) sont aptes à amener de l'eau.

12. Dispositif pour le drainage de petit-lait selon l'une quelconque des revendications 1 à 11, **caractérisé en ce que** les moyens de positionnement (20) comportent aussi des moyens de décharge pour le milieu à pression.

13. Dispositif pour le drainage de petit-lait selon l'une quelconque des revendications 1 à 12, **caractérisé en ce qu'**au moins un tuyau ou une conduite pour un milieu à pression est monté dans l'espace situé entre les éléments tubulaires interne et externe et est connecté à au moins un élément d'étanchéité.
